# EUROPÄISCHE PATENTSCHRIFT

(11) **EP 1 364 756 B1**
(45) Veröffentlichungstag und Bekanntmachung des Hinweises auf die Patenterteilung: **27.07.2005**
(21) Anmeldenummer: 03011245.2
(22) Anmeldetag: 16.05.2003
(51) Int. Cl.: B25J 15/04, B23Q 1/00, B23Q 3/18

(54) **Werkzeugwechsel- und/oder Kupplungssystem**
Tool changer and/or coupling system
Système de changement d'outil et/ou de couplage

(30) Priorität: 23.05.2002 DE 20208060 U
(43) Veröffentlichungstag der Anmeldung: 26.11.2003
(73) Patentinhaber: Staeubli Tec-Systems GmbH, 95448 Bayreuth (DE)
(72) Erfinder: Böhm, Georg, 91281 Kirchenthumbach (DE)
(74) Vertreter: Grünecker, Kinkeldey, Stockmair & Schwanhäusser Anwaltssozietät

(56) Entgegenhaltungen:
- EP-A- 0 288 148
- US-A- 5 069 524

## Beschreibung

Die vorliegende Erfindung betrifft ein Werkzeugwechsel- und/oder Kupplungssystem, insbesondere für Industrieroboter, mit einem ersten und einem zweiten Kupplungselement, wobei eines der beiden Kupplungselemente eine Eingriffseinrichtung und das andere Kupplungselement eine zugehörige Aufnahmeeinrichtung aufweist und die beiden Kupplungselemente durch axialen Eingriff miteinander koppelbar sind, und mit einer Verriegelungseinrichtung für die miteinander in Eingriff befindlichen Kupplungselemente. (Siehe, z.B., EP-0 288 148-A.).

Werkzeugwechsel- und/oder Kupplungssysteme der vorgenannten Art sind aus dem Stand der Technik bekannt. Bekannte Werkzeugwechselsysteme weisen ein erstes und ein zweites Kupplungselement auf. Das erste Kupplungselement besteht aus einem oder mehreren, vorzugsweise zwei, zylinderförmigen Stiften. Das zweite Kupplungselement besteht aus einem oder mehreren, vorzugsweise zwei, zylinderförmigen Aufnahmen. Beim Zusammenführen der beiden Elemente greifen die zylinderförmigen Stifte in die zylinderförmigen Aufnahmen ein, um die beiden Teile in axialer und radialer Richtung zu halten. Weiterhin weisen derartige Werkzeugwechselsysteme eine Verriegelungseinrichtung für die miteinander in Eingriff befindlichen Kupplungselemente auf.

Die Herstellung derartiger Werkzeugwechselsysteme ist aufwendig und teuer, da eine sehr genaue Fertigung nötig ist. Aufgrund der Toleranzen der Verbindungsstifte und Aufnahmen kann es zu einem Spiel zwischen den beiden Teilen kommen, was zu Ungenauigkeiten führen kann.

Der Erfindung liegt daher die Aufgabe zugrunde, ein Werkzeugwechsel- und/oder Kupplungssystem, insbesondere für Industrieroboter, der eingangs genannten Art anzugeben, das einfach in der Fertigung ist und eine hohe Positioniergenauigkeit beim Koppeln der Kupplungselemente aufweist.

Diese Aufgabe wird mit einem Werkzeugwechsel- und/oder Kupplungssystem gemäß Anspruch 1 gelöst.

Durch die zusammenwirkenden (korrespondierenden) Kegelflächenabschnitte sind die beiden Kupplungselemente radial sehr leicht ausrichtbar und spielfrei miteinander zu verbinden. Durch die Anordnung der Medienleitungs- und/oder Signalleitungsdurchführung innerhalb der Eingriffs- und Aufnahmeeinrichtungen ist eine achsnahe Anordnung für Hochdruckkupplungen vorhanden. Dadurch treten allenfalls minimale elastische Verformungen auf. Da die entsprechenden Drehmomente verhältnismäßig gering gehalten werden können, sind auch die Reaktionskräfte in dem eine genormte Schnittstelle zwischen Maschinen-(Roboter)-Seite und Werkzeugseite bildenden Kupplungssystem minimal. Überdies kann eine hohe Ziel- und/oder Positioniergenauigkeit des druckbeaufschlagten Systems erreicht werden. Zudem können die Kegelflächenabschnitte kostengünstig hergestellt werden.

Nach einem bevorzugten Ausführungsbeispiel der Erfindung weisen die Kupplungselemente im gekoppelten Zustand eine gemeinsame Mittelachse auf. Auf diese Weise ist eine gute Verbindung der beiden Kupplungselemente gewährleistet.

Vorzugsweise kann die Medien- und/oder Signalleitungsdurchführung, insbesondere für Elektrik, Pneumatik, Hydraulik oder Lichtwellenleiter an der Eingriffs- und Aufnahmeeinrichtung vorgesehen sein. Somit kann ein Abknicken oder eine anderweitige Verformung der Medien- und/oder Signalleitungen verhindert werden, vielmehr können die Medien- und/oder Signalleitungen stationär relativ zur Mittelachse gehalten werden.

Nach einer weiteren bevorzugten Ausführungsform erfolgt eine Verdrehsicherung über die Kegelflächenabschnitte oder über formschlüssige Eingriffselemente zwischen den beiden Kupplungsteilen. Somit ist ein präziser Sitz der Kupplungslemente in Umfangsrichtung gewährleistet.

Bevorzugterweise sind die Kegelflächenabschnitte des zweiten Kupplungselementes und/oder des ersten Kupplungselementes zumindest abschnittsweise ringförmig ineinandergreifend miteinander verbunden.

Vorteilhafterweise sind Eingriffselemente zum Ausrichten von erstem und zweitem Kupplungselement vorgesehen, wobei dabei die Kupplungselemente durch ein Eingriffselemente in einer bestimmten Umfangsposition zueinander montierbar sein können. Zudem kann die Verriegelungseinrichtung im zweiten Kupplungselement angeordnet sein. Außerdem kann die Verriegelungseinrichtung zur Ausbildung eines Formschlusses zwischen den Kupplungselementen vorgesehen sein.

Das erste Kupplungselement ist vorzugsweise als roboterseitiges und das zweite Kupplungselement ist vorzugsweise als werkzeugseitiges Kupplungselement ausgebildet. Weiterhin kann die Verriegelungseinrichtung einen verdrehbaren Schließring zum Überführen der Verriegelungseinrichtung von einer geöffneten in eine geschlossene Stellung aufweisen. Dabei weist die Verriegelungseinrichtung vorteilhafterweise Koppelstangen auf, die mit dem Schließring und mit dem wenigstens einem Klauenelement bewegbar verbunden sind, wobei Schließring und Klauenelement in Umfangsrichtung relativ zueinander verlagerbar sind.

Es ist vorteilhaft, wenn eine integrierte Programmierhilfe durch direkte Positionsvermessung an korrespondierenden Flächen, Abstandsflächen oder Fluchtflächen vorgesehen ist. Es ist ebenfalls hilfreich, wenn die Verriegelungseinrichtung eine Antriebseinheit aufweist. Dabei kann die Antriebseinheit lösbar mit der Verriegelungseinrichtung verbunden sein. Außerdem kann dabei die Antriebseinheit ein Öffnungssicherung aufweisen.

Es ist außerdem bevorzugt, wenn in die Verriegelungseinrichtung eine Notlöseeinrichtung integriert und/oder die Verriegelungseinrichtung nach Entfernen der Antriebseinheit manuell betätigbar ist. Vorteilhaft ist ebenfalls, wenn das zweite Kupplungselement einen sternförmigen Werkzeugträger, vorzugsweise mit sechs Armen, aufweist. Dabei können am sternförmigen Werkzeugträger eine Mehrzahl von Werkzeugaufnahmen vorgesehen sein. Bevorzugt ist weiter, daß der Werkzeugträger auswechselbare Bestückungsträger, insbesondere werkzeugspezifische Einsteckmodule, aufweist.

Dabei können die Bestückungsträger auch im eingekuppelten Zustand des Werkzeugwechsel- und/oder Kupplungssystems auswechselbar sein. Vorteilhaft ist es auch, wenn Antriebseinheiten unterschiedlicher Art einsteckbar und als Module austauschbar sind, wobei die Module der Antriebseinheiten auch im gekuppelten Zustand des Werkzeugwechsel- und/oder Kupplungssystems austauschbar sein sollten.

Die Erfindung wird nachstehend anhand von bevorzugten Ausführungsbeispielen in Verbindung mit den zugehörigen Zeichnungen näher erläutert. In diesen zeigen:
- Fig. 1: eine perspektivische Darstellung eines Werkzeugwechsel- und/oder Kupplungssystems mit einem ersten und einem zweiten Kupplungselement im gekoppelten Zustand,
- Fig. 2: eine perspektivische Darstellung des ersten Kupplungselementes mit Ansicht auf die Kupplungsseite des ersten Kupplungselementes mit dem zweiten Kupplungselement,
- Fig. 3: eine perspektivische Darstellung des ersten Kupplungselementes mit Ansicht auf die dem zweiten Kupplungselement abgewandte (und damit dem Industrieroboter zugewandte) Seite,
- Fig. 4: eine perspektivische Darstellung des zweiten Kupplungselementes mit Ansicht auf die Kupplungsseite des zweiten Kupplungselementes mit dem ersten Kupplungselement,
- Fig. 5: eine perspektivische Darstellung einer Verriegelungseinrichtung des Werkzeugwechsel- und/oder Kupplungssystems im geöffneten Zustand,
- Fig. 6: eine perspektivische Darstellung der Verriegelungseinrichtung nach Fig. 5 im geschlossenen Zustand.

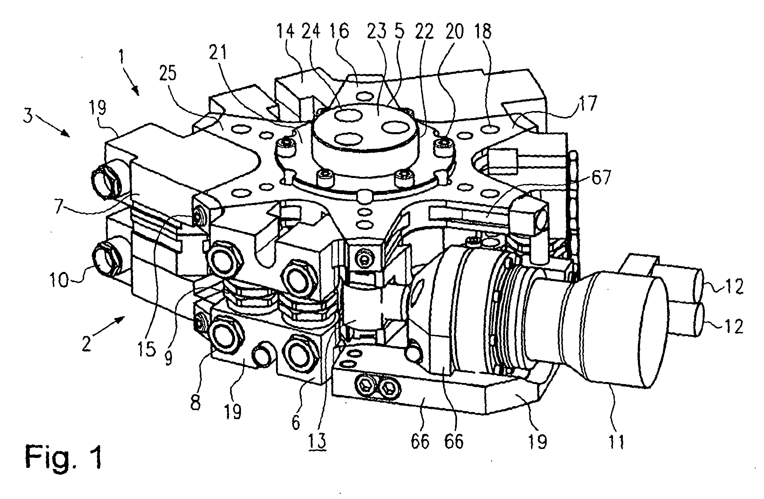

Im folgenden wird ein Werkzeugwechsel- und/oder Kupplungssystem 1 für Industrieroboter als einem Ausführungsbeispiel für die Anwendung eines derartigen Werkzeugwechsel- und/oder Kupplungssystems anhand der Fig. 1 bis 6 näher erläutert. Das Werkzeugwechsel- und/oder Kupplungssystems stellt eine verdreh- und biegesteife, lösbare Kupplung dar, wobei Versuche mit dem nachstehend beschriebenen Ausführungsbeispiel ergaben, daß die Kupplungsflächen des Werkzeugwechsel- und/oder Kupplungssystems, d.h. die zusammenwirkenden (korrespondierenden) Kegelflächenabschnitte, bis zu 500 kg aufnehmen können.

Das in Fig. 1 im gekoppelten Zustand gezeigte Werkzeugwechsel- und/oder Kupplungssystem 1 weist ein (mit dem Industrieroboter verbundenes) erstes Kupplungselement 2 und ein (mit einem Werkzeug wie Schweißzangen, Klebepistolen oder Nietzangen bzw. mit einer Handhabungseinrichtung wie Haltemittel mit beispielsweise Saugnäpfen oder Klemmen verbundenes) zweites Kupplungselement 3 auf. Nachfolgend wird das erste Kupplungselement 2 als roboterseitiges Kupplungselement 2, und das zweite Kupplungselement 3 als werkzeugseitiges Kupplungselement 3 bezeichnet.

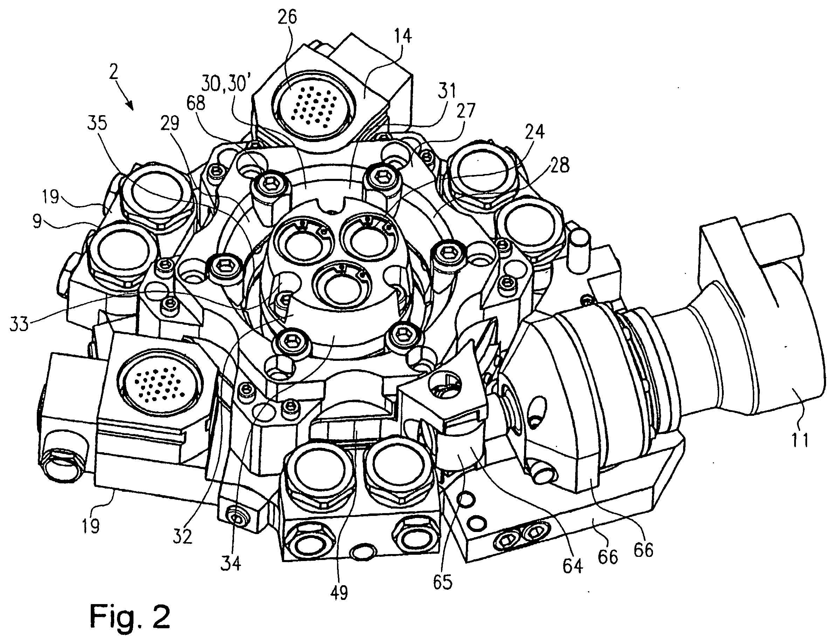

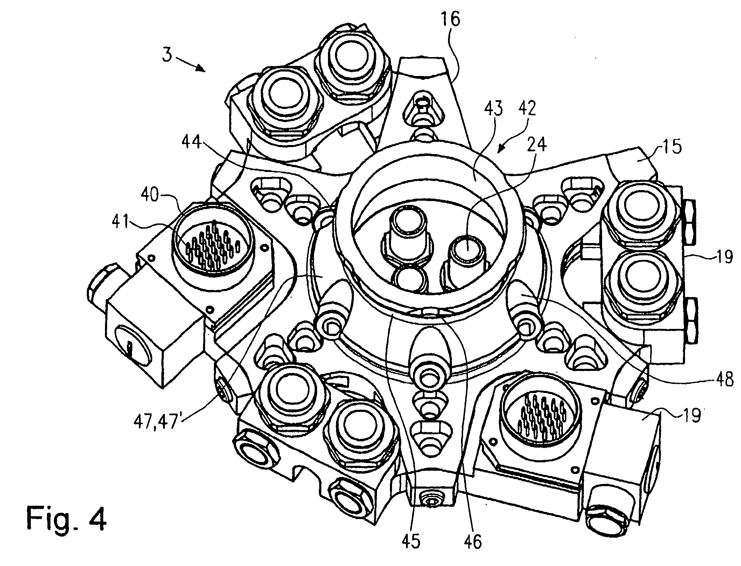

Das roboterseitige Kupplungselement 2 und das werkzeugseitige Kupplungselement 3 weisen im gekoppelten Zustand (vgl. Fig. 1) eine gemeinsame Mittelachse auf, wodurch eine achsgenaue Verbindung der beiden Kupplungselemente 2 und 3 ermöglicht ist. Zur Kupplung der Kopplungselemente 2,3 weist das roboterseitige Kupplungselement 2 eine erste Kegelfläche 34 und eine zweite Kegelfläche 30' auf, die konzentrisch zueinander und beabstandet voneinander angeordnet sind (siehe Fig. 2). Zwischen den ersten und zweiten Kegelflächen 30', 34 des roboterseitigen Kupplungselementes 2 ist eine Nut 35 gebildet, wobei ein Abstand der Kegelflächen 30',34 und damit eine Breite der Nut 35 in Richtung zum werkzeugseitigen Kupplungselement 3 hin zunimmt, d.h. die Nut 35 nach innen verjüngt ausgeführt ist. Das in Fig. 4 gezeigte werkzeugseitige Kupplungselement 3 greift mit einer im wesentlichen ringförmige Eingriffseinrichtung 42 mit einer Innenfläche 43 in die aufgrund der Anordnung der Kegelfläche nach innen verjüngte Nut 35 ein.

Das mit dem zweiten Kupplungselement 3 verbundene Werkzeug bzw. die mit dem zweiten Kupplungselement 3 verbundene Handhabungseinrichtung wird über Medienzuführungen (bspw. Druckluftleitungen) mit entsprechenden Medien versorgt und über Signalleitungen zugeführte Steuersignale gesteuert. Die Medien- und/oder Signalzuführung erfolgt dabei über die werkzeugseitigen und roboterseitigen Kupplungselemente 2,3, wobei diese dazu u.a. mehrere sog. Bestückungsträger 19 zur medialen und/oder signaltechnischen Versorgung aufweisen.

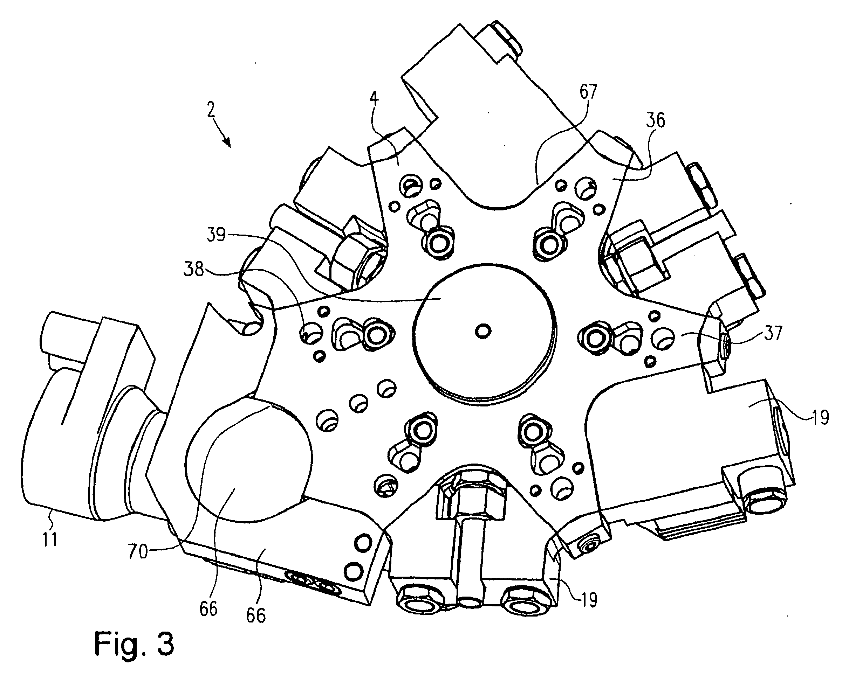

Dabei sind an einer Umfangsfläche eines Grundkörpers 4 (siehe Fig. 3) des roboterseitigen Kupplungselementes 2 und an der Umfangsfläche 7 eines Grundkörpers 5 des werkzeugseitigen Kupplungselementes 3, die jeweils eine sternförmige Gestalt besitzen, mehrere leicht auswechselbare Bestückungsträger 19 als Einsteckmodule angeordnet. Die Verbindung der jeweiligen Grundkörper 4,5 mit den Bestückungsträger 19 erfolgt über eine schwimmende Lagerung in der Art einer Nut-Feder-Verbindung.

Dabei sind an Seitenflächen der Bestückungsträger 19 jeweils Vorsprünge (vergleichbar einer Feder einer Nut-Feder-Verbindung zur Kraftübertragung) ausgebildet, die in Ausnehmungen (vergleichbar einer Nut einer Nut-Feder-Verbindung zur Kraftübertragung) des sternförmigen Grundkörpers 4 des roboterseitigen Kupplungselementes 2 bzw. des sternförmigen Grundkörpers 5 des werkzeugseitigen Kupplungselementes 3 eingreifen. Die Vorsprünge der Bestückungsträger 19 sind in den Ausnehmungen der Grundkörper 4,5 bewegbar. Dementsprechend sind die Bestückungsträger 19 bezüglich der Mittelachse radial verlagerbar und parallel zur Mittelachse fixiert.

Durch die im wesentlichen sternförmige Gestaltung des Grundkörper 4,5 ergeben sich auch im wesentlichen V-förmige, radial zur Mittelachse zugängliche Aussparungen, wobei in den Seitenflächen der Aussparungen die (Führungs-)Nuten 67 ausgebildet sind, in die die nicht im einzelnen gezeigten Vorsprünge (Federn) der Bestückungsträger 19 eingreifen. Ein "Herausfallen" der Bestückungsträger 19 aus den Führungsnuten 67 ist durch an den freien Enden der Arme des sternförmigen Grundkörper 4,5 angeordnete Endstücke, welche die Führungsnuten 67 abschließen, verhindert.

Durch diese Befestigungsmethode sind die Bestückungsträger 19 schwimmend" gelagert, d.h. diese sind axial formschlüssig (mit einem gewissen Spiel) angeordnet und weisen senkrecht zur Achse ebenfalls ein gewisses Spiel auf.

Alternativ können die Führungsnuten 67 an dem Bestückungsträgem 19 und die Vorsprünge an den sternförmigen Grundkörpern 4,5 ausgebildet sein.

Die miteinander im Eingriff befindlichen, als Einsteckmodule ausgebildeten Bestückungsträger 19 können im gekoppelten Zustand entfernt bzw. montiert werden. Dadurch entfällt die Notwendigkeit beim Verbinden bzw. beim Trennen der roboterseitigen und werkzeugseitigen Kupplungselemente 2,3 die Medien- und/oder Signalleitungen von den jeweiligen Leitungsanschlüssen 8 zu entfernen bzw. mit den Leitungsanschlüssen 8 zu verbinden, wodurch eine erhebliche Zeitersparnis beim Wechseln der Kupplungseinrichtung 2 bzw. 3 erreichbar ist.

Einer der in Fig. 1 gezeigten Bestückungsträger 19 des roboterseitigen Kupplungselementes 2 und einer der in Fig. 1 gezeigten Bestückungsträger 19 des werkzeugseitigen Kupplungselementes 3 weisen jeweils Leitungsanschlüsse 8 für Medien wie Druckluft und mit diesen Leitungsanschlüssen 8 korrespondierende Leitungskupplungen 9 auf. Dabei ist der Bestückungsträger 19 des roboterseitigen Kupplungselementes 2 gegenüberliegend zum Bestückungsträger 19 des werkzeugseitigen Kupplungselementes 3 angeordnet. Diese Leitungsanschlüsse 8 der Bestückungsträger 19 der beiden Kupplungselemente 2 und 3 werden durch die Leitungskupplungen 9 bei Kupplung der roboterseitigen und werkzeugseitigen Kupplungselemente 2,3 miteinander verbunden, so daß die Leitungsanschlüsse 8 miteinander in Eingriff gelangen. Beim Verbinden der Leitungskupplungen 9 der roboterseitigen und werkzeugseitigen Kupplungselemente 2,3 bzw. beim Kuppeln der roboterseitigen und werkzeugseitigen Kupplungselemente 2,3 selbst werden Ventile der Medienleitungen geöffnet bzw. bei Lösen der roboterseitigen und werkzeugseitigen Kupplungselemente geschlossen.

Zudem sind an den Umfangsflächen der Grundkörper 4,5 weitere Bestückungsträger 19 mit Leitungsanschlüssen für weitere Medien- oder Signalanschlüsse 9 vorgesehen. Insbesondere weisen in Fig. 1 einer der Bestückungsträger 19 des roboterseitigen Kupplungselementes 2 und einer der in Fig. 1 gezeigten Bestückungsträger 19 des werkzeugseitigen Kupplungselementes 3 Signalleitungsanschlüsse 10 und mit diesen verbundene Steckerbuchsen 26 bzw. Steckerkontakten 40 auf. Dabei ist der entsprechende Bestückungsträger 19 des roboterseitigen Kupplungselementes 2 gegenüberliegend zum entsprechenden Bestückungsträger 19 des werkzeugseitigen Kupplungselementes 3 angeordnet. Bei Kupplung der roboterseitigen und werkzeugseitigen Kupplungselemente 2,3 werden die Steckerbuchse 26 und der Steckerkontakt 40 miteinander verbunden, wodurch die Signalleitungsanschlüsse 10 miteinander in Verbindung treten. Bei Kupplung der Steckerbuchse 26 des roboterseitigen Kupplungselementes 2 und mit dem Steckerkontakt 40 des werkzeugseitigen Kupplungselementes 3 werden Kontakte zwischen den Signalleitungen (also eine Steuerverbindung) geschlossen bzw. bei Lösen der roboterseitigen und werkzeugseitigen Kupplungselemente 2,3 geöffnet.

Fig. 2 zeigt eine perspektivische Darstellung des roboterseitigen Kupplungselementes 2 mit Ansicht auf die Kupplungsseite mit dem werkzeugseitigen Kupplungselement 3.

Aus Fig. 2 ist ersichtlich, daß am Grundkörper des roboterseitigen Kupplungselementes 2 insgesamt fünf Bestückungsträger 19 angeordnet sind. Drei der Bestückungsträger 19 weisen jeweils ein Paar Leitungsanschlüsse 8 und mit den Leitungsanschlüssen 8 korrespondierende Kupplungseinrichtungen 9 auf. Die zwei weiteren Bestückungsträger 19 weisen jeweils einen Signalleitungsanschluß 10 und eine Steckerbuchse 26 auf, deren koppelbare Seiten dem werkzeugseitigen Kupplungselement 3 zugewandt angeordnet sind.

In Fig. 3 ist ein sternförmiger Träger 36 als ein wesentliches Bauteil des Grundkörpers 4 erkennbar, der sechs Trägerarme 37 mit Bohrungen 38 aufweist. Die Bohrungen sind auf konzentrischen Kreisen angeordnet, wobei die konzentrischen Kreise im vorliegenden Ausführungsbeispiel einen Durchmesser von 125 mm, 160 mm bzw. 200 mm aufweisen. Diese Bohrungskreise bilden Teilkreise für Befestigungsmittel (Befestigungsschrauben) am Roboter, wobei die unterschiedlichen Teilkreise für unterschiedlich ausgebildete roboterseitige Befestigungsbereiche vorgesehen sind. Dementsprechend ist das roboterseitige Kupplungselement 3 ohne wesentliche Änderungen vornehmen zu müssen, an unterschiedliche Roboter mit verschiedenen (genormten) Schnittstellen anbaubar, wodurch eine weitere Kosten- und Zeitersparnis gegeben ist.

In der Mitte des sternförmigen Trägers 36 befindet sich ein Zentrieransatz 39 über den das roboterseitige Kupplungselement 2 beim Verbindung mit dem Roboter zentrierbar ist, wodurch die Ausrichtung des roboterseitigen Kupplungselementes 2 erleichtert ist.

Das roboterseitige Kupplungselement 2 nimmt eine Verriegelungseinrichtung 13 auf, welche unterhalb eines Konusträger 27 angeordnet ist. Durch die Anordnung der Verriegelungseinrichtung 13 im roboterseitigen Kupplungselement 2 werden Kosten gespart, da nicht für jedes werkzeugseitige Kupplungselement 3 eine eigene Verriegelungseinrichtung 13 benötigt wird.

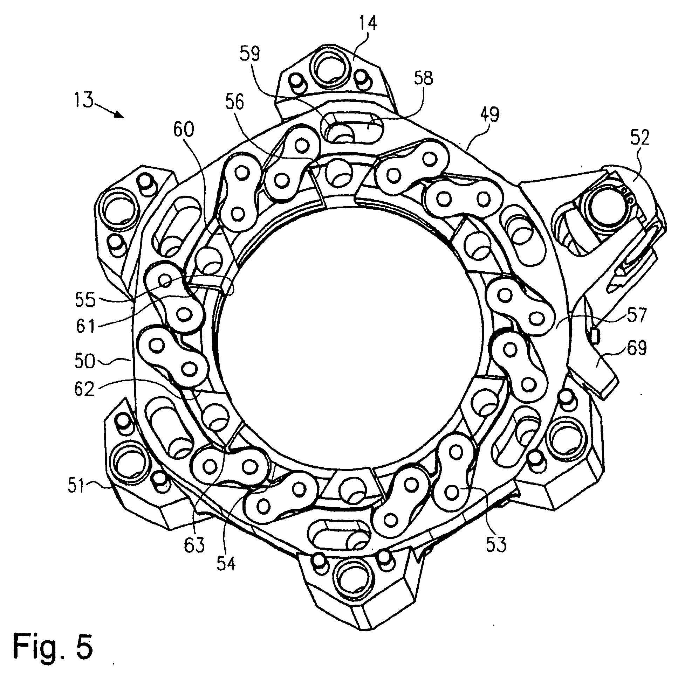

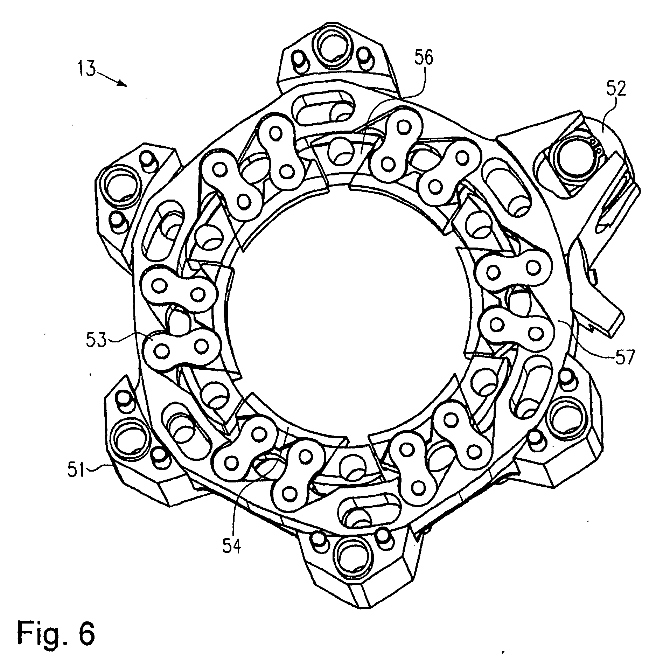

In Fig. 5 ist die Verriegelungseinrichtung 13 im geöffneten Zustand und in Fig. 6 ist die Verriegelungseinrichtung 13 im geschlossenen Zustand dargestellt.

Die Verriegelungseinrichtung 13 weist einen in Fig. 2 teilweise sichtbaren Schließring 49 auf, der auf einem Schließringträger bewegbar angeordnet ist. Der Schließring 49 ist auf dem Schließringträger schwimmend gelagert, wodurch eine Anpassung an einen Achsversatz zwischen den werkzeugseitigen und roboterseitigen Kupplungselementes 2,3 ermöglicht ist. Der Schließringträger selbst ist im Grundkörper des roboterseitigen Kupplungselementes 2 über Verbindungselemente 51 fest angeordnet. Schwimmend gelagert bedeutet, daß der Schließring 49 axial fest (mit einem gewissen Spiel) angeordnet ist und senkrecht zur Mittelachse ebenfalls ein gewisses Spiel aufweist.

Die Verriegelungseinrichtung 13 weist weiterhin mehrere, im vorliegenden Ausführungsbeispiel sechs Klauenelemente 54 auf. Die Klauenelemente 54 der Verriegelungseinrichtung 13 sind auf der Innenseite 55 des Schließrings 49 bewegbar angeordnet, wobei die Klauenelemente 54 jeweils zwischen zwei fest am roboterseitigen Kupplungselement 2 oder am Schließringträger angeordneten Führungsmitteln 56 gleitend gelagert ist. Dabei sind die Führungsmittel 56 und die Klauenelemente 54 jeweils alternierend entlang der inneren Umfangsfläche des Schließringes 49 angeordnet, d.h. zwischen zwei benachbarten Klauenelementen 54 ist jeweils eines der Führungsmittel 56 angeordnet und umgekehrt.

Die Führungsmittel 56 weisen jeweils zwei Gleitflächen auf, welche die Klauenelemente 54 seitlich lagern, wobei die Gleitflächen eines Führungsmittels 56 aufgrund der altemierenden Anordnung von Klauenelementen 54 und Führungsmitteln 56 jeweils benachbarte Klauenelemente 54 abstützen.

Wie aus Fig. 5 ersichtlich bilden die Klauenelemente 54 mit den Führungsmittel 56 im geöffneten Zustand der Verriegelungseinrichtung 13 einen "inneren Ring".

Jedes der Klauenelemente 54 ist mit dem Schließring 49 über jeweils zwei Koppelstangen 53 verbunden, wobei die Koppelstangen 53 an dem Schließring 49 und an den Klauenelementen 54 bewegbar, insbesondere über eine Nietverbindung (wie bei einer Gliederkette) gelagert sind. Dadurch, daß jedes der Klauenelemente 54 über zwei Koppelstangen 53 mit dem Schließring 49 verbunden ist, ergibt sich ein Vier-Gelenk, das die einzelnen Klauenelemente 54 im Zusammenspiel mit den Führungsmitteln 56 führt (Vier-Gelenk-Getriebe).

Bei Betätigen der Verriegelungseinrichtung 13 wird der Schließring 49 um die Mittelachse der Kupplungselemente 2,3 verdreht. Gemeinsam mit dem Schließring 49 werden auch die vernieteten Verbindungsstellen der Koppelstangen 53 am Schließring 49 verlagert. Die mit den Koppelstangen 53 verbundenen Klauenelemente 54 können der Verlagerung nicht unmittelbar folgen, da diese seitlich durch die Gleitflächen der Führungsmittel 56 abgestützt werden. Dementsprechend dreht sich der Schließring 49 und somit auch die an ihm befestigten Koppelstangen 53 geführt durch das Vier-Gelenk relativ zu den Klauenelementen 54, wodurch diese radial (bezüglich der Mittelachse der Kupplungselemente 2,3) nach bewegt werden.

Erfolgt die Bewegung der Klauenelemente 4 radial nach innen, so wird die Verriegelungseinrichtung 13 in die geschlossene Stellung (vgl. Fig. 6) überführt. Dadurch wird eine feste Verriegelung erreicht. In Fig. 6 ist der geschlossene Zustand der Verriegelungseinrichtung 13 dargestellt. Die Klauenelemente 54 sind zur Mittelachse und damit zum Zentrum des Schließrings 49 hin verschoben und die Koppelstangen 53 sind im wesentlichen radial an dem Schließring 49 angeordnet.

Erfolgt die Bewegung der Klauenelemente 4 radial nach außen, so wird die Verriegelungseinrichtung 13 in die offene Stellung (vgl. Fig. 5) überführt. Die feste Verriegelung wird gelöst.

Die jeweiligen Beziehungen der Gleitflächen von Klauenelementen 54 und Führungsmitteln 56 sind abhängig von der Drehrichtung des Schließringes 49, also davon, ob die Verriegelungseinrichtung geöffnet oder geschlossen wird.

Der Schließring 49 weist weiterhin sechs Langlöcher 58 auf, die mit sechs Rundlöcher 59 des Schließringträgers der Verriegelungseinrichtung 13 korrespondieren. Die Langlöcher 58 sichern die Bewegungsfreiheit des Schließringes 49 bei Verbindung des roboterseitigen Kupplungselementes 2 mit dem Roboter.

Die Bohrungen des mittleren Teilkreises (mit dem Durchmesser von 160 mm) korrespondiert mit den Langlöchern 58 des Schließring 49 und mit den Rundlöchern 59 des Schließringträgers der Verriegelungseinrichtung 13. Wird der mittlere Teilkreis zum Befestigen des roboterseitigen Kupplungselementes 3 am Roboter genutzt, durchsetzen die entsprechenden Befestigungsmittel die Langlöcher 58. Durch die Ausbildung als Langlöcher sichern diese die Bewegungsfreiheit des Schließringes 49.

Am Grundkörper 4 des roboterseitigen Kupplungselementes 2 ist zudem eine Antriebseinheit 11 mit entsprechenden Anschlüssen 12 angeordnet, welche die im roboterseitigen Kupplungselement 2 aufgenommene und in den Fig. 5 und 6 im geöffneten bzw. im geschlossenen Zustand gezeigte Verriegelungseinrichtung 13 antreibt. Die Antriebseinheit 11 weist einen Motor und ein Getriebe auf, die über eine Spindel und eine Spindelmutter mit dem Schließring 49 verbunden sind. Dementsprechend wirkt die Antriebseinheit 11 über die Spindel 64 und die Spindelmutter 65 auf den Schließring 49.

Die Antriebseinheit 11 ist in einem (von dem roboterseitigen Kupplungselement 2 unabhängigen und mit diesem über Befestigungsmittel wie Schrauben verbindbares) Modul 19 zusammengefaßt und damit auf einfache Weise (durch Lösen der Befestigungsmittel) austauschbar, wobei der Austausch auch im gekoppelten Zustand der ersten und zweiten Kupplungselemente 2,3 erfolgen kann. Dadurch ist eine beträchtliche Zeitersparnis beim Austausch der Antriebseinheit 11 gegeben.

Der Träger 36 weist eine abweichend von der V-Form ausgebildete Führungsnut 70 auf, in der Vorsprünge zweier Halter 66 des Moduls der Antriebseinheit 11 aufgenommen sind, wobei das Modul der Antriebseinheit 11 mittels der Halter 66 am roboterseitigen Kupplungselement 3 befestigt ist. Die Ausbildung der Halter 66 des Moduls der Antriebseinheit 11 erfolgt dergestalt, daß diese leicht an zwei der Arme des Trägers 36 befestigbar sind.

Alternativ können die Führungsnuten 70 am Halter 66 des Moduls der Antriebseinheit 11 und die Vorsprünge am Träger 36 ausgebildet sein.

Weiterhin verfügt der Träger 36 über im wesentlichen gerade Führungsabschnitte mit dazu passenden Anlageabschnitten, die im wesentlichen parallel zueinander verlaufen und zur Montage von Träger 36 und Halter des Moduls der Antriebseinheit in Anlage bringbar sind.

Die Ausgestaltung des Verschlußsystems der Verriegelungseinrichtung 13 ist unabhängig von der Art der Antriebseinheit 11. Dementsprechend sind verschiedenste Antriebsarten möglich, insbesondere elektrisch, pneumatisch oder hydraulisch, wodurch die gewählte Antriebsart den jeweiligen Verhältnissen des konkreten Anwendungsfalls angepaßt werden kann. Zudem kann in die jeweils gewählte Antriebsart eine Öffnungssicherung integriert sein, wodurch ein unbeabsichtigtes Öffnen der Verriegelungseinrichtung 13 verhindert ist.

Das Öffnen bzw. Schließen der Verriegelungseinrichtung 13 kann zudem auch manuell durch einen Benutzer erfolgen. Insbesondere ist der Schließring nach Entfernen der Antriebseinheit 11 über die Spindelmutter bzw. die Spindel auch manuell per Schraubenschlüssel betätigbar, wodurch beispielsweise eine Entriegelung auch bei ausgefallener Antriebseinheit 11 ermöglicht ist. Somit ist auch bei einem Ausfall der Antriebseinheit 11 ein Lösen der beiden Kupplungselemente 2,3 möglich (Notlösefunktion der Kupplung). Auf gleiche Weise kann auch allgemein ein manuelles Öffnen bzw. Schließen des Werkzeugwechsel- und/oder Kupplungssystems mit einem Handwerkzeug wie einem Schraubenschlüssel vorgenommen werden. Mit Hilfe des Schraubenschlüssels wird dabei eine Kraft auf die Spindelmutter 65 durch Drehen der Spindel 64 ausgeübt.

Zusätzlich weist die Verriegelungseinrichtung 13 eine Schaltfahne 69 zum Betätigen eines (nicht dargestellten) Schalters auf.

Außerdem weist das roboterseitige Kupplungselement 2 sechs Eingriffselemente auf, die als Führungssäulen 68 ausgebildet sind. Durch die Führungssäulen 68 ist sichergestellt, daß beiden Kupplungselemente 2,3 stets in derselben Umfangsposition zueinander montiert werden. Somit ist ein Kuppeln der Kupplungselemente 2,3 in einer fehlerhaften Position zueinander verhindert.

Der Konusträger 27 weist in einem Mittelbereich desselben eine Ausnehmung auf, wobei an einer Innenseite 29 des Konusträgers 27 ein Innenkonus 30 mit der Kegelfläche 30' ausgebildet ist. Durch die Führungssäulen 68 wird die Kegelfläche 30' in Kegelflächenabschnitte unterteilt, die an ihren Rändern miteinander verbunden sind. Im Mittelbereich des roboterseitigen Kupplungselementes 2 und damit auch im Bereich der Ausnehmung ist weiterhin ein Trägerelement 32 angeordnet, das in Form eines Kegelabschnittes ausgebildet und mittels mehrerer (vorliegend drei) Befestigungseinrichtungen am roboterseitigen Kupplungselement 2 befestigt ist. Zur leichteren Fixierung der Befestigungseinrichtungen weist das Trägerelement 32 entsprechende Aussparungen 33 auf.

Der Konusträger 27 und das Trägerelement 32 sind Teil einer Aufnahmeeinrichtung 31, die im Mittelbereich des roboterseitigen Kupplungselementes 2 angeordnet ist.

An der dem werkzeugseitigen Kupplungselement 3 zugewandten Seite 14 des roboterseitigen Kupplungselementes 2 sind drei Leitungsdurchführungen und Kupplungen 24 für Medienleitungen bzw. Signalleitungen innerhalb der Aufnahmeeinrichtung 31 im Bereich der Mittelachse angeordnet. Dies ergibt eine besonders vorteilhafte, geschützte Anordnung insbesondere für Hochdruckkupplungen, da die Hochdruckkupplungen in dieser Anordnung geschützt gegen Fremdeinwirkungen sind und da nur geringste elastische Verformungen und höchste Zielgenauigkeit des druckbeaufschlagten Systems erreicht werden können. Weiterhin kann aufgrund dieser zentralen Durchführmöglichkeit eine (nicht gezeigte) Drehdurchführung an der Aufnahmeeinrichtung 31, insbesondere für Elektrik, Pneumatik, Hydraulik oder Lichtwellenleiter adaptiert werden, wodurch eine Belastung dieser Leitungen verhindert ist.

Die Zuleitungen zu diesen drei Leitungsdurchführungen bzw. den entsprechenden Kupplungen 24 sind wie aus Fig. 3 ersichtlich jeweils als Einzelleitungen im Mittelbereich der Bestückungsträger 19 von außen an den Grundkörper des roboterseitigen Kupplungselementes 3 herangeführt. Dabei zeigt Fig. 3 eine perspektivische Ansicht auf das roboterseitige Kupplungselement 3 von der dem Roboter zugewandten Seite, also der Anschlußseite an dem Roboter.

In dieser Darstellung sind auch die Zuleitungen zu den Kupplungen der Leitungsdurchführungen 24 im Mittelbereich der Bestückungsträger 19 ersichtlich.

In Fig. 4 ist die Kupplungsseite des werkzeugseitigen Kupplungselementes 3 in einer perspektivischen Darstellung gezeigt.

Das werkzeugseitige Kupplungselement 3 weist ebenfalls einen sternförmigen Werkzeugträger 16 auf, der (wie schon aus Fig. 1 ersichtlich) den Grundkörper des werkzeugseitigen Kupplungselementes 3 bildet. Der sternförmige Werkzeugträger 16 des werkzeugseitigen Kupplungselementes 3 ist im wesentlichen analog zum vorstehend beschriebenen Träger 36 des roboterseitigen Kupplungselementes 2 ausgebildet. Lediglich der Bereich zur Aufnahme des Moduls der Antriebseinheit 11 des Trägers 36 des roboterseitigen Kupplungselementes 2 fehlt am Werkzeugträger 16 die Führungsnute 70. Die Befestigung der Bestückungsträger 19 des sternförmigen Werkzeugträgers 16 erfolgt hierbei im wesentlichen gleichartig zum Träger 36 des roboterseitigen Kupplungselementes 2.

Der Werkzeugträger 16 weist sechs Arme 17 mit einer Vielzahl von Bohrungen 18 auf, die entlang konzentrischen Kreisen angeordnet sind. Der Werkzeugträger 16 ist derart gestaltet, daß Anschraubbohrbilder mit bestimmten Teilkreisdurchmesser (beispielsweise 125 mm, 160 mm oder 200 mm) verwendbar sind, so daß verschiedene hier nicht dargestellte Werkzeuge, z.B. über einen Servomotor gesteuerte Schweißzangen oder Greifer, leicht montiert und entfernt werden können.

An der Stirnseite der Arme 17 des sternförmigen Werkzeugträgers 16 sind Abschlußstücke 15 vorgesehen. Die am Werkzeugträger 16 angebrachten Abschlußtücke 15 können als Schaltfahnen ausgebildet sein.

Weiterhin ist ein modulares Werkzeug-Bestückungssystem vorgesehen derart, daß eine Bestückung des werkzeugseitigen Kupplungselementes 3 mit leicht auswechselbaren Bestückungsträgem 19, z. B. Einsteckmodulen, erfolgt. Eine wesentliche Zeitersparnis und Erleichterung des Austausches ist dadurch gegeben, daß die Bestückungsträger 19 auch im gekuppelten Zustand der Werkzeugwechsel- und/oder Kupplungsvorrichtung ausgewechselt werden können.

Dabei weist das werkzeugseitige Kupplungselement 3 am Werkzeugträger 16 neben drei Bestückungsträgem 19 mit Kupplungseinrichtungen 9 noch zwei weitere Bestückungsträger 19 mit Steckerkontakten 40 und mit mehreren Steckerstiften 41 auf, die beim Zusammenführen der beiden Kupplungselemente 2 und 3 mit denen in Fig. 2 gezeigten Steckerbuchsen 26 des roboterseitigen Kupplungselementes 2 in Eingriff gelangen.

Die Befestigung der Bestückungsträger 19 am sternförmigen Werkzeugträger 16 des werkzeugseitigen Kupplungselementes 3 und am Träger 36 des roboterseitigen Kupplungselementes 2 erfolgt derart, daß die Bestückungsträger 19 "schwimmend" gelagert sind, d.h. die Bestückungsträger 19 weisen innerhalb dieses Festsitzes Spiel auf.

Darüber hinaus sind in diesem Fall drei Kupplungen 24 für Medienleitungen bzw. Signalleitungen im Mittelbereich des Werkzeugträgers 16 vorgesehen. Die an der dem roboterseitigen Kupplungselement 2 zugewandten Seite des werkzeugseitigen Kupplungselementes 3 angeordneten Kupplungen 24 korrespondieren mit den drei Kupplungen der Leitungsdurchführungen 24 innerhalb der Aufnahmeeinrichtung 31 im Bereich der Mittelachse des roboterseitigen Kupplungselementes 2. Beim Kuppeln der werkzeugseitigen und roboterseitigen Kupplungselementen 2,3 gelangen auch die Kupplungen der Leitungsdurchführungen 24 innerhalb der Aufnahmeeinrichtung 31 im Bereich der Mittelachse des roboterseitigen Kupplungselementes 2 mit den entsprechenden gegenüberliegenden Kupplungen 24 für Medienleitungen bzw. Signalleitungen im Mittelbereich des Werkzeugträgers 16 in Eingriff.

An der dem roboterseitigen Kupplungselement 2 abgewandten Seite des Werkzeugträgers 16 des werkzeugseitigen Kupplungselementes 3 ist mittels mehrerer Befestigungsmittel 20 eine Anschraubplatte 21 mit einem zylindrischen Aufsatz 22 angeordnet, an dessen Oberseite 23 im Mittelbereich drei Leitungsdurchführungen 24 für Medien- oder Signalleitungen angeordnet sind. Über diese Leitungsdurchführungen sind die von dem roboterseitigen Kupplungselement 2 über die Kupplungen der Leitungsdurchführungen desselben übertragenen Medien und/oder Signale an ein Werkzeug bzw. eine Handhabungseinrichtung weiterleitbar bzw. Medien und/oder Signale von dem Werkzeug bzw. der Handhabungseinrichtung zurückführbar.

Weiterhin weist das Kupplungselement 3 eine im wesentlichen ringförmige Eingriffseinrichtung 42 mit einer Innenfläche 43 und eine Außenseite 44 mit eine Nut 45 und Einbuchtungen 46 auf, wobei die Eingriffseinrichtung 42 in die Aufnahmeeinrichtung 31, die im Mittelbereich des roboterseitigen Kupplungselementes 2 angeordnet ist, eingreift.

Weiterhin weist die Eingriffseinrichtung 42 einen Außenkonus 47 mit einer Kegelfläche 47' mit Aussparungen 48 und mit Einbuchtungen 46 auf, wobei die Aussparungen 48 die Kegelfläche 47' in Kegelflächenabschnitte aufteilen, die an ihren Rändern miteinander verbunden sind. Durch diese Ausgestaltung ist ein leichter Zugang zu den Aufnahmen 18 im Werkzeugträger 16 gewährleistet. Weiterhin nehmen die Einbuchtungen 46 im gekoppelten Zustand der beiden Kupplungselemente 2,3 die Führungssäulen 68 des roboterseitigen Kupplungselementes 2,3 auf, wodurch ein wiederholbares und sicheres Ausrichten von roboterseitigem 2 und werkzeugseitigem Kupplungselement 3 sichergestellt ist. Dementsprechend sind die beiden Kupplungselemente 2 und 3 im gekoppelten Zustand in einer reproduzierbaren Position zueinander koppelbar.

Weiterhin ist eine integrierte Programmierhilfe zur Positionsvermessung an Flucht- und Messflächen 25 direkt am Werkzeugwechselsystem 1 vorhanden, wobei die Positionsvermessung während des Zusammenfahrens von roboterseitigem und werkzeugseitigem Kupplungselement 2 bzw. 3 erfolgt. Die vorstehend beschriebenen korrespondierenden Flächen können dabei zur Abstandsmessung und/oder axialen Richtungsbestimmung beim Koppeln der beiden Kupplungselemente 2,3 genutzt werden. Somit ist eine genaue Justierung der Kupplungselemente 2 und 3 möglich.

Nachfolgend wird die Wirkungs- und Funktionsweise der Erfindung näher erläutert.

Zuerst wird das roboterseitige Kupplungselement 2 mittels des in Fig. 3 gezeigten Trägers 36 und Befestigungsschrauben, welche die Bohrungen 38 durchsetzen, am Roboter befestigt.

Anschließend wird das werkzeugseitige Kupplungselement 3 mit dem roboterseitigen Kupplungselement 2 durch axialen Eingriff verbunden, wobei das die Eingriffseinrichtung 42 des werkzeugseitigen Kupplungselementes 3 mit der Aufnahmeeinrichtung 31 des roboterseitigen Kupplungselementes 2 in Eingriff gebracht wird. Dabei ist die Kegelfläche 30' der Aufnahmeeinrichtung 31 in Kontakt mit der Kegelfläche 47' der Eingriffseinrichtung 42.

Zudem greifen die Führungssäulen 68 in die Einbuchtungen 46 und die Konusaussparungen 48 ein. Die Führungssäulen 68 ermöglichen eine genaue Ausrichtung der Kupplungselemente 2 und 3 in Umfangsrichtung.

Durch das Zusammenwirken der Kegelfläche 47' der Eingriffseinrichtung 42 und der Kegelfläche 30' der Aufnahmeeinrichtung 31 ist eine Selbstzentrierung gegeben. Die Flächenkontakte erfolgen über die Kegelflächen 30, 30', 47, 47', wodurch eine gute Verbindung gegeben ist. Weiterhin gewährleisten die Kegelflächen 30, 30', 47, 47' eine Verdrehsicherung.

Die Eingriffseinrichtung 42 durchsetzt die Aufnahmeeinrichtung 31 soweit und wird an diese angenähert, bis diese an der Nut 35 und der roboterabgewandten Seite 14 der Aufnahmeeinrichtung 31 aufliegt.

Danach wird die Antriebseinheit 11 betätigt, wodurch der Schließring 49 verdreht wird, und wodurch die Klauenelemente 54 über die Vier-Gelenke radial nach innen verschoben werden. Durch diese Bewegung der Klauenelemente 54 zur Innenseite 55 des Schließrings 49 greifen diese in die Nut 45 der Eingriffseinrichtung 42 ein.

Somit wird durch die Verriegelungseinrichtung 13 ein Formschluss zwischen den Kupplungselementen 2 und 3 erzeugt, wodurch eine spielfreie und feste Verbindung erreicht wird.

Beim Überführen der Verriegelungseinrichtung 13 von der geöffneten Stellung in die geschlossene Stellung gleiten die Klauenelemente 54 radial nach innen an den Gleitflächen der Führungsmittel 56 entlang.

Vorzugsweise ist die Werkzeugseite vor dem Koppeln der beiden Kupplungshälften komplett vormontiert. Es ist jedoch im Einzelfall auch denkbar, Werkzeuge bzw. Handhabungseinrichtungen daran anschließend auf dem sternförmigen Werkzeugträger 16 des werkzeugseitigen Kupplungselementes 3 zu montieren.

Abhängig vom konkreten Einzelfall ist eine Verwendung der Kupplungselemente 2,3 ohne die Bestückungsmodule 19 und die Träger 16,36 denkbar. Dadurch können z.B. die Medienleitungen zweier Roboterarme (d.h. beispielsweise eines zusätzlichen Roboterarmes der statt des Werkzeugkopfes angekoppelt wird und zusätzliche Bewegungsfreiheitsgrade über eine eigene Bewegung ermöglicht) miteinander verbunden werden, wobei die Medienleitungen/ Signalleitungen durch die Leitungsdurchführungen 24 der Kupplungselemente 2,3 verlegt und die entsprechenden Kupplungen miteinander verbunden sind.

Die Bestückung am roboterseitigen bzw. werkzeugseitigen Kupplungselement 2,3 kann durch Auswechseln der Bestückungsträger 19 auch im gekoppelten Zustand erfolgen.

Auch die Antriebseinheit 11 ist als Modul 19 austauschbar. Es können z.B. Antriebsarten mit elektrischem, pneumatischem oder hydraulischem Antrieb verwendet werden, in die jeweils eine Öffnungssicherung integriert ist, um ein unbeabsichtigtes Lösen der Kupplungselemente 2 und 3 zu vermeiden.

Ein Austausch der Module der Antriebseinheit 11 bzw. der übrigen Bestückungsträger 19 ist sogar im gekoppelten Zustand möglich, was eine große Zeitersparnis mit sich bringt und wodurch der Austausch vereinfacht wird. Dazu werden die nicht gezeigten Vorsprünge der Bestückungsträger 19 in die Führungsnuten 67 bzw. 70 der Träger 16 bzw. 36 eingeführt und mittels der Abschlussstücke 15 befestigt. Es ist zu beachten, daß die entsprechenden Module an den beiden Trägern 16 und 36 übereinander angeordnet sind, damit die Kupplungseinrichtungen 9 bzw. Steckerbuchsen 26 und Steckerkontakte 40 miteinander verbunden werden können.

Während des axialen Verbindens der roboterseitigen und werkzeugseitigen Kupplungselemente 2 bzw. 3 erfolgt eine Positionsvermessung an Flucht- und Messflächen 25. Dadurch ist eine besonders genaue Positionierung der beiden Kupplungselemente 2 und 3 möglich. Während des Zusammenfahrens gelangen auch die entsprechenden Bestückungsträger 19 und die Kupplungen der Leitungsdurchführungen 24 der beiden Kupplungselemente 2 und 3 miteinander in Eingriff.

Zum Trennen der Kupplungselemente 2 und 3 wird die Antriebseinheit 11 in entgegengesetzter Richtung betrieben, wodurch der Schließring 49 und damit auch die Kopplungsstangen 53 und die mit diesen verbundenen Klauenelemente 54 in die Positionen des geöffneten Zustands (vgl. Fig. 5) überführt werden.

Nach Abbau der Antriebseinheit 11 kann die Verriegelungseinrichtung 13 auch mit Handwerkzeugen betätigt werden. Dies ist vorteilhaft, da auch bei Ausfall des Verschlussantriebes 11 die Verriegelungseinrichtung 13 geöffnet werden kann. Im Anschluß daran kann die Verbindung der Kupplungselemente 2 und 3 leicht durch Auseinanderfahren der beiden Kupplungselemente 2 und 3 gelöst werden.

Durch das vorstehend beschriebene Werkzeugwechselsystem können die beiden Kupplungselemente 2 und 3 radial sehr leicht ausgerichtet und spielfrei miteinander verbunden werden.

Durch die zentrumsnahe Anordnung der Leitungsdurchführungen 24 wird gewährleistet, daß eine Verformung des Systems, wie sie insbesondere bei hohen Druckbeaufschlagungen der Medienleitungen auftreten könnten, minimal bleibt. Ebenfalls sind durch die zentrumsnahe Anordnung der Kupplungselemente, die große Reaktionskräfte hervorrufen können, minimiert.

Durch die Benutzung eines modularen Bestückungssystems können die Bestückungsträger 19 leicht, sogar im gekoppelten Zustand, ausgetauscht werden.

Die Erfindung ist besonders für die Verwendung in Verbindung mit Industrierobotern, z.B. für die Aufnahme von Schweißzangen in der Automobilindustrie oder dergleichen geeignet, ohne hierauf beschränkt zu sein. Vielmehr bildet der Anmeldungsgegenstand ein Universal-Kupplungs- und/oder Werkzeugwechselsystem, das auch mit anderen Arten von Fertigungssystemen und Maschinen, bei denen eine positionsgenaue, einfach handhabbare und austauschbare Kupplungs- und/oder Werkzeugwechselstruktur erforderlich ist, z.B. im Werkzeugmaschinenbereich, wie CND-Fertigungscentern verwendet werden kann.

## Patentansprüche

1. Werkzeugwechsel- und/oder Kupplungssystem, insbesondere für Industrieroboter, mit einem ersten (2) und einem zweiten Kupplungselement (3), wobei eines der beiden Kupplungselemente (2,3) eine Eingriffseinrichtung (42) und das andere Kupplungselement (2,3) eine zugehörige Aufnahmeeinrichtung (31) aufweist und die beiden Kupplungselemente (2,3) durch axialen Eingriff miteinander koppelbar sind, und mit einer Verriegelungseinrichtung (13) für die miteinander in Eingriff befindlichen Kupplungselemente (2,3), **dadurch gekennzeichnet, daß** die Eingriffseinrichtung (42) und die Aufnahmeeinrichtung (31) zusammenwirkende Kegelflächenabschnitte (30,30',47,47') in einem Mittelbereich der Kupplungselemente (2,3) aufweisen, wobei die Aufnahmeeinrichtung (31) konzentrisch zueinander und beabstandet zueinander angeordnete Kegelflächen (30,34) aufweist, welche eine Nut (35) bilden, in die die Eingriffseinrichtung (42) eingreift, und daß zumindest eine Medien- und/oder Signalleitungsdurchführung (24) innerhalb der Eingriffseinrichtung (42) und der Aufnahmeeinrichtung (31) im Bereich der Mittelachse vorgesehen ist.

2. Werkzeugwechsel- und/oder Kupplungssystem nach Anspruch 1, **dadurch gekennzeichnet, daß** die Kupplungselemente (2,3) eine zylindrische Struktur und im gekoppelten Zustand eine gemeinsame Mittelachse aufweisen.

3. Werkzeugwechsel- und/oder Kupplungssystem nach Anspruch 1 oder 2, **dadurch gekennzeichnet, daß** eine Medien- und/oder Signalleitungsdrehdurchführung, insbesondere für Elektrik, Pneumatik, Hydraulik oder Lichtwellenleiter, an der Eingriffseinrichtung (42) und der Aufnahmeeinrichtung (31) vorgesehen ist.

4. Werkzeugwechsel- und/oder Kupplungssystem nach einem der vorhergehenden Ansprüche 1 bis 3, **dadurch gekennzeichnet, daß** die Kegelflächenabschnitte (30,30',47,47') in Flächenkontakt sind.

5. Werkzeugwechsel- und/oder Kupplungssystem nach einem der vorhergehenden Ansprüche 1 bis 4, **dadurch gekennzeichnet, daß** eine Verdrehsicherung durch die Kegelflächenabschnitte (30,30',47,47') gebildet ist.

6. Werkzeugwechsel- und/oder Kupplungssystem nach einem der vorhergehenden Ansprüche 1 bis 5, **dadurch gekennzeichnet, daß** die Kegelflächenabschnitte (30,30',47,47') des zweiten Kupplungselementes (3) und/oder des ersten Kupplungselementes (2) zumindest abschnittsweise ringförmig ineinandergreifend miteinander verbunden sind.

7. Werkzeugwechsel- und/oder Kupplungssystem nach einem der vorhergehenden Ansprüche 1 bis 6, **dadurch gekennzeichnet, daß** Eingriffselemente (68) zum Ausrichten von erstem (2) und zweitem Kupplungselement (3) vorgesehen sind, wobei die Kupplungselemente (2,3) insbesondere durch die Eingriffelemente (68) in einer bestimmten Umfangsposition zueinander montierbar sind.

8. Werkzeugwechsel- und/oder Kupplungssystem nach einem der vorhergehenden Ansprüche 1 bis 7, **dadurch gekennzeichnet, daß** das erste Kupplungselement als roboterseitiges und das zweite Kupplungselement als werkzeugseitiges Kupplungselement ausgebildet ist.

9. Werkzeugwechsel- und/oder Kupplungssystem nach einem der vorhergehenden Ansprüche 1 bis 8, **dadurch gekennzeichnet, daß** die Verriegelungseinrichtung (13) einen verdrehbaren Schließring (49) zum Überführen der Verriegelungseinrichtung (13) von einer geöffneten in eine geschlossene Stellung aufweist, wobei die Verriegelungseinrichtung (13) insbesondere Koppelstangen (53) aufweist, die mit dem Schließring (49) und mit dem wenigstens einem Klauenelement (54) bewegbar verbunden sind, und wobei Schließring (49) und Klauenelement (54) in Umfangsrichtung relativ zueinander verlagerbar sind.

10. Werkzeugwechsel- und/oder Kupplungssystem nach einem der vorhergehenden Ansprüche 1 bis 9, **dadurch gekennzeichnet, daß** eine integrierte Programmierhilfe durch direkte Positionsvermessung an korrespondierenden Fläche, Abstandsflächen oder Fluchtflächen vorgesehen ist.

11. Werkzeugwechsel- und/oder Kupplungssystem nach einem der vorhergehenden Ansprüche 1 bis 10, **dadurch gekennzeichnet, daß** die Verriegelungseinrichtung (13) eine Antriebseinheit (11) aufweist.

12. Werkzeugwechsel- und/oder Kupplungssystem nach einem der vorhergehenden Ansprüche 1 bis 11, **dadurch gekennzeichnet, daß** in die Verriegelungseinrichtung (13) eine Notlöseeinrichtung integriert und/oder die Verriegelungseinrichtung (13) nach Entfernen der Antriebseinheit (11) manuell betätigbar ist.

13. Werkzeugwechsel- und/oder Kupplungssystem nach einem der vorhergehenden Ansprüche 1 bis 12, **dadurch gekennzeichnet, daß** das zweite Kupplungselement (3) einen sternförmigen Werkzeugträger (16), vorzugsweise mit sechs Armen (17), aufweist, wobei am sternförmigen Werkzeugträger (16) insbesondere eine Mehrzahl von Werkzeugaufnahmen (18) vorgesehen sind.

14. Werkzeugwechsel- und/oder Kupplungssystem nach einem der vorhergehenden Ansprüche 1 bis 13, **dadurch gekennzeichnet, daß** der Werkzeugträger (16) auswechselbare Bestückungsträger (19), insbesondere werkzeugspezifische Einsteckmodule, aufweist, wobei die Bestückungsträger (19) insbesondere auch im eingekuppelten Zustand des Werkzeugwechsel- und/oder Kupplungssystems auswechselbar sind.

15. Werkzeugwechsel- und/oder Kupplungssystem nach einem der vorhergehenden Ansprüche 11 bis 14, **dadurch gekennzeichnet, daß** Antriebseinheiten (11) unterschiedlicher Art einsteckbar und als Module austauschbar sind, wobei die Module der Antriebseinheiten insbesondere auch im gekuppelten Zustand des Werkzeugwechsel- und/oder Kupplungssystems austauschbar sind.

## Claims

1. Tool-changing and/or coupling system, in particular for industrial robots, with a first (2) and a second coupling element (3), one of which coupling elements (2, 3) has a locating mechanism (42) and the other coupling element (2, 3) has a co-operating receiving mechanism (31) and the two coupling elements (2, 3) can be coupled with one another by engaging axially, a locking mechanism (13) being provided for the coupling elements (2, 3) when mutually engaged, **characterised in that** the locating mechanism (42) and the receiving mechanism (31) have co-operating conical surface portions (30, 30', 47, 47') in a middle region of the coupling elements (2, 3), whilst the receiving mechanism (31) has conical surfaces (30, 34) disposed concentrically with one another and at a distance apart from one another forming a groove (35) in which the locating mechanism (42) engages and at least one media and/or signal line duct (24) is provided inside the locating mechanism (42) and the receiving mechanism (31) in the region of the mid-axis.

2. Tool changing and/or coupling system as claimed in claim 1, **characterised in that** the coupling elements (2, 3) have a cylindrical structure and a common mid-axis in the coupled state.

3. Tool changing and/or coupling system as claimed in claim 1 or 2, **characterised in that** a medium and/or signal line duct, in particular for electric, pneumatic, hydraulic or optical fibre supply lines is provided on the locating mechanism (42) and the receiving mechanism (31).

4. Tool changing and/or coupling system as claimed in one of the preceding claims 1 to 3, **characterised in that** the conical surface portions (30, 30', 47, 47') are in surface contact.

5. Tool changing and/or coupling system as claimed in one of the preceding claims 1 to 4, **characterised in that** the conical surface portions (30, 30', 47, 47') prevent rotation.

6. Tool changing and/or coupling system as claimed in one of the preceding claims 1 to 5, **characterised in that** the conical surface portions (30, 30', 47, 47') of the second coupling element (3) and/or the first coupling element (2) are joined to one another in an annular engagement one inside the other in at least certain regions.

7. Tool changing and/or coupling system as claimed in one of the preceding claims 1 to 6, **characterised in that** locating elements (68) are provided for orienting the first (2) and second coupling element (3), by means of which the coupling elements (2, 3) can be assembled with one another by the locating elements (68) in particular in a specific circumferential position.

8. Tool changing and/or coupling system as claimed in one of the preceding claims 1 to 7, **characterised in that** the first coupling element is a robot-end coupling element and the second coupling element is a tool-end coupling element.

9. Tool changing and/or coupling system as claimed in one of the preceding claims 1 to 8, **characterised in that** the locking mechanism (13) has a rotatable retaining ring (49) for transferring the locking mechanism (13) from an open to a closed position, which locking mechanism (13) specifically has coupling rods (53) which are displaceably connected to the retaining ring (49) and to the at least one claw element (54), and the retaining ring (49) and claw element (54) are displaceable relative to one another in the circumferential direction.

10. Tool changing and/or coupling system as claimed in one of the preceding claims 1 to 9, **characterised in that** an integrated programming support is provided in the form of a direct position-measuring system for co-operating surfaces, spacer surfaces or aligned surfaces.

11. Tool changing and/or coupling system as claimed in one of the preceding claims 1 to 10, **characterised in that** the locking mechanism (13) has a drive unit (11).

12. Tool changing and/or coupling system as claimed in one of the preceding claims 1 to 11, **characterised in that** an emergency release mechanism is integrated in the locking mechanism (13) and/or the locking mechanism (13) can be manually operated once the drive unit (11) has been removed.

13. Tool changing and/or coupling system as claimed in one of the preceding claims 1 to 12, **characterised in that** the second coupling element (3) has a star-shaped tool holder (16), preferably with six arms (17), and a plurality of tool locators (18) is specifically provided on the star-shaped tool holder (16).

14. Tool changing and/or coupling system as claimed in one of the preceding claims 1 to 13, **characterised in that** the tool holder (16) has interchangeable fitting holders (19), in particular plug-in modules for specific tools, and the fitting holders (19) can be changed, in particular also when the tool changing and/or coupling system is in the plugged-in state.

15. Tool changing and/or coupling system as claimed in one of the preceding claims 11 to 14, **characterised in that** drive units (11) of different types can be plugged in and are interchangeable as modules, and the modules of the drive units can be changed in particular also when the tool changing and/or coupling system is in the coupled state.

## Revendications

1. Système de changement d'outil et/ou de couplage, en particulier pour des robots industriels, avec un premier élément de couplage (2) et un second élément de couplage (3), l'un ayant un dispositif de pénétration (42) et l'autre un dispositif de réception correspondant (31), et les deux éléments de couplage (2, 3) étant aptes à être couplés grâce à une interpénétration axiale, et avec un dispositif de verrouillage (13) pour les éléments de couplage (2, 3) en position d'interpénétration, **caractérisé en ce que** le dispositif de pénétration (42) et le dispositif de réception (31) ont des sections à surfaces coniques concourantes (30, 30 , 47, 47) dans une zone centrale des éléments de couplage (2, 3), le dispositif de réception (31) présentant des surfaces coniques (30, 34) concentriques et espacées qui forment une rainure (35) dans laquelle pénètre le dispositif de pénétration (42), et **en ce qu'**au moins un passage pour fluide et/ou pour câblage de signalisation (24) est prévu à l'intérieur du dispositif de pénétration (42) et du dispositif de réception (31), dans la zone de l'axe central.

2. Système de changement d'outil et/ou de couplage selon la revendication 1, **caractérisé en ce que** les éléments de couplage (2, 3) ont une structure cylindrique et, en position couplée, un axe central commun.

3. Système de changement d'outil et/ou de couplage selon la revendication 1 ou 2, **caractérisé en ce qu'**un passage rotatif pour fluide et/ou pour câblage de signalisation, en particulier pour une installation électrique, pneumatique ou hydraulique ou pour des fibres optiques, est prévu sur le dispositif de pénétration (42) et sur le dispositif de réception (31).

4. Système de changement d'outil et/ou de couplage selon l'une des revendications précédentes 1 à 3, **caractérisé en ce que** les sections à surfaces coniques (30, 30 , 47, 47) sont en contact superficiel.

5. Système de changement d'outil et/ou de couplage selon l'une des revendications précédentes 1 à 4, **caractérisé en ce qu'**une protection contre une rotation est formée par les sections à surfaces coniques (30, 30 , 47, 47).

6. Système de changement d'outil et/ou de couplage selon l'une des revendications précédentes 1 à 5, **caractérisé en ce que** les sections à surfaces coniques (30, 30 , 47, 47) du second élément de couplage (3) et/ou du premier élément de couplage (2) sont reliées par interpénétration au moins par segments, suivant une forme annulaire.

7. Système de changement d'outil et/ou de couplage selon l'une des revendications précédentes 1 à 6, **caractérisé en ce qu'**il est prévu des éléments de pénétration (68) pour aligner le premier élément de couplage (2) et le second élément de couplage (3), les éléments de couplage (2, 3) étant aptes à être montés grâce aux éléments de pénétration (68) dans une position circonférentielle mutuelle définie.

8. Système de changement d'outil et/ou de couplage selon l'une des revendications précédentes 1 à 7, **caractérisé en ce que** le premier élément de couplage est conçu comme un élément de couplage situé côté robot, et le second comme un élément de couplage situé côté outil.

9. Système de changement d'outil et/ou de couplage selon l'une des revendications précédentes 1 à 8, **caractérisé en ce que** le dispositif de verrouillage (13) comporte une bague de fermeture apte à tourner (49) pour le faire passer d'une position ouverte à une position fermée, le dispositif de verrouillage (13) présentant en particulier des tiges de couplage (53) qui sont reliées, mobiles, à la bague de fermeture (49) et à l'élément ou aux éléments formant mâchoires (54), et la bague de fermeture (49) et l'élément formant mâchoire (54) étant aptes à être déplacés l'un par rapport à l'autre dans le sens circonférentiel.

10. Système de changement d'outil et/ou de couplage selon l'une des revendications précédentes 1 à 9, **caractérisé en ce qu'**il est prévu une aide de programmation intégrée, grâce à une mesure de position directe sur les surfaces correspondantes, les surfaces espacées ou les surfaces alignées.

11. Système de changement d'outil et/ou de couplage selon l'une des revendications précédentes 1 à 10, **caractérisé en ce que** le dispositif de verrouillage (13) comporte une unité d'entraînement (11).

12. Système de changement d'outil et/ou de couplage selon l'une des revendications précédentes 1 à 11, **caractérisé en ce qu'**un dispositif de déverrouillage d'urgence est intégré dans le dispositif de verrouillage (13) et/ou le dispositif de verrouillage (13) est apte à être actionné manuellement après démontage de l'unité d'entraînement (11).

13. Système de changement d'outil et/ou de couplage selon l'une des revendications précédentes 1 à 12, **caractérisé en ce que** le second élément de couplage (3) comporte un porte-outil en étoile (16), de préférence avec six bras (17), plusieurs logements d'outil (18) étant prévus notamment sur le porte-outil en étoile (16).

14. Système de changement d'outil et/ou de couplage selon l'une des revendications précédentes 1 à 13, **caractérisé en ce que** le porte-outil (16) comporte des supports de garnissage remplaçables (19), en particulier des modules d'emboîtement propres aux outils, ces supports de garnissage (19) pouvant être changés même dans la position couplée du système de changement d'outil et/ou de couplage, notamment.

15. Système de changement d'outil et/ou de couplage selon l'une des revendications précédentes 11 à 14, **caractérisé en ce que** des unités d'entraînement (11) de différents types sont aptes à être emboîtées et à être changées sous la forme de modules, les modules des unités d'entraînement pouvant être changés même dans la position couplée du système de changement d'outil et/ou de couplage, notamment.
